# EUROPEAN PATENT APPLICATION

(11) **EP 4 651 359 A1**
(43) Date of publication of application: **19.11.2025**
(21) Application number: 24770274.9
(22) Date of filing: 05.02.2024
(51) Int. Cl.: H02M 7/48

(54) **VEHICLE DRIVE DEVICE**

(30) Priority: 14.03.2023 JP 2023039626
(71) Applicant: AISIN CORPORATION, Kariya-shi, Aichi 448-8650 (JP); DENSO CORPORATION, Kariya-shi, Aichi 448-8661 (JP); Blue Nexus Corporation, Anjo-shi, Aichi 446-0058 (JP)
(72) Inventor: YAMASAKI, Shoichi, Kariya-shi, Aichi 448-8650 (JP); SUZUKI, Tomoyuki, Kariya-shi, Aichi 448-8650 (JP); NISHIMACHI, Seiichiro, Kariya-shi, Aichi 448-8661 (JP); TORII, Takeshi, Anjo-shi, Aichi 446-0058 (JP)
(74) Representative: Kramer Barske Schmidtchen Patentanwälte PartG mbB
(86) International application number: PCT/JP2024/003652
(87) International publication number: WO 2024/190154

(57) **Abstract**

There is disclosed a vehicle drive device including a rotary electric machine, a transmission mechanism, a power module, a capacitor module, a wiring module, and a case. The case integrally includes a portion that forms a first housing chamber, a portion that forms a second housing chamber, and a partition portion that separates the first housing chamber and the second housing chamber from each other. The first housing chamber houses the rotary electric machine and the transmission mechanism. The second housing chamber houses the power module, the capacitor module, and the wiring module. The power module, the capacitor module, and the wiring module are directly fastened to the partition portion at respective fastening positions not overlapping each other as viewed in an upper-lower direction.

## Description

### TECHNICAL FIELD

The present disclosure relates to a vehicle drive device.

### BACKGROUND ART

In a configuration including a case that houses a rotary electric machine, an inverter device, and a transmission mechanism, there is known a technique in which an inverter housing to which the inverter device is fixed is placed and fixed on a housing body to which the rotary electric machine and the like are fixed.

### CITATION LIST

### PATENT LITERATURE

Patent Literature 1: WO 2020/179217 A

### SUMMARY OF INVENTION

### TECHNICAL PROBLEMS

However, such a configuration as described above is a structure in which main components (a power module, a smoothing capacitor, and the like) of the inverter device are stacked in an upper-lower direction to be fixed to the inverter housing, and an increase in size in the upper-lower direction becomes a problem. In addition, such a configuration as described above is a structure in which the housing body and the inverter housing to which the inverter device is fixed are fixed to each other, and it is necessary to assemble the inverter device to the inverter housing and to assemble the inverter housing to the housing body, and there is such a problem that working efficiency is not excellent.

Therefore, in one aspect, the present disclosure increases working efficiency at a time of assembling while reducing a size in an upper-lower direction.

### SOLUTION TO PROBLEMS

In one aspect, there is provided a vehicle drive device including:
a rotary electric machine;
a transmission mechanism drivingly coupled between the rotary electric machine and a wheel;
a power module including a power semiconductor element, the power module being configured to supply alternating-current power of a plurality of phases to the rotary electric machine;
a capacitor module including a smoothing capacitor electrically connected between the power module and a power supply;
a wiring module including bus bars of a plurality of phases that electrically connect the rotary electric machine and the power module; and
a case that houses the rotary electric machine, the transmission mechanism, the power module, the capacitor module, and the wiring module,
in which
the case integrally includes a portion that forms a first housing chamber, a portion that forms a second housing chamber, and a partition portion that separates the first housing chamber and the second housing chamber from each other,
the first housing chamber houses the rotary electric machine and the transmission mechanism,
the second housing chamber houses the power module, the capacitor module, and the wiring module, and
the power module, the capacitor module, and the wiring module are directly fastened to the partition portion at respective fastening positions not overlapping each other as viewed in an upper-lower direction.

### ADVANTAGEOUS EFFECTS OF INVENTION

In one aspect, according to the present disclosure, it is possible to increase working efficiency at a time of assembling while reducing a size in an upper-lower direction.

### BRIEF DESCRIPTION OF DRAWINGS

FIG. 1 is a top-view schematic diagram showing a mounted state of a vehicle drive device in a vehicle.
FIG. 2 is a cross-sectional view of relevant parts of the vehicle drive device.
FIG. 2A is a skeleton diagram showing the vehicle drive device.
FIG. 3 is a top view schematically showing the vehicle drive device according to the present embodiment.
FIG. 3A is a cross-sectional view schematically showing a water passage structure between a partition portion and a power module.
FIG. 3B is a cross-sectional view schematically and partially showing fastening structures between various bus bars, as taken along line B-B in FIG. 3.
FIG. 3C is a top view schematically showing the vehicle drive device according to the present embodiment.
FIG. 4 is a side view schematically showing the vehicle drive device according to the present embodiment.
FIG. 5 is a perspective view of a second terminal part of a bus bar module of the vehicle drive device of the present embodiment.
FIG. 6 is a top view of a vehicle drive device according to a first modification.
FIG. 7 is a perspective view of a second terminal part of a bus bar module of the vehicle drive device according to the first modification.
FIG. 8 is a top view of a vehicle drive device according to a second modification.
FIG. 8A is a side view schematically showing the vehicle drive device according to the second modification.
FIG. 9 is a top view of a vehicle drive device according to a third modification.
FIG. 10 is a diagram showing an example of an electric circuit including a Y capacitor.
FIG. 11 is an explanatory diagram of a vehicle drive device with a three-axis configuration.

### DESCRIPTION OF EMBODIMENTS

Hereinafter, each embodiment will be described in detail with reference to the accompanying drawings. Note that the dimensional ratios in the drawings are merely examples and the dimensional ratios are not limited thereto, and shapes and the like in the drawings may be partially exaggerated for convenience of description. In addition, in the drawings, only some of a plurality of portions having the same attribute may be denoted by reference signs for ease of viewing.

The directions for each member in the following description indicate directions in a state where the member is assembled in a vehicle drive device 100. In addition, terms related to a dimension, a disposition or arrangement direction, a disposition or arrangement position, and the like for each member are concepts including a state including a difference due to deviation (deviation within a range allowable in manufacturing).

As used herein, the phrase "drivingly coupled" refers to a state in which two rotary elements are coupled to be able to transmit drive power (synonymous with torque), and includes a state in which the two rotary elements are coupled to rotate together or a state in which the two rotary elements are coupled to be able to transmit drive power via one or two or more transmission members. Examples of such a transmission member include various members (for example, a shaft, a gear mechanism, a belt, a chain, and the like) that transmit rotation at the same speed or at a shifted speed. Note that the transmission member may include an engagement device (for example, a friction engagement device or a meshing-type engagement device) that selectively transmits rotation and drive power.

As used herein, the term "rotary electric machine" is used as a concept including a motor (electric motor), a generator (electric power generator), and a motor-generator that functions as both the motor and the generator as necessary. In addition, as used herein, with respect to the disposition or arrangement of two members, the phrase "overlap as viewed in a specific direction" means that when an imaginary straight line parallel to the direction of the view is moved in each direction orthogonal to the imaginary straight line, a region where the imaginary straight line intersects both of the two members exists at least in part. Further, as used herein, with respect to the disposition or arrangement of two members, the phrase "disposition or arrangement regions in a specific direction overlap" means that at least a part of a disposition or arrangement region, in the specific direction, of one of the two members is included in a disposition or arrangement region, in the specific direction, of the other one of the two members.

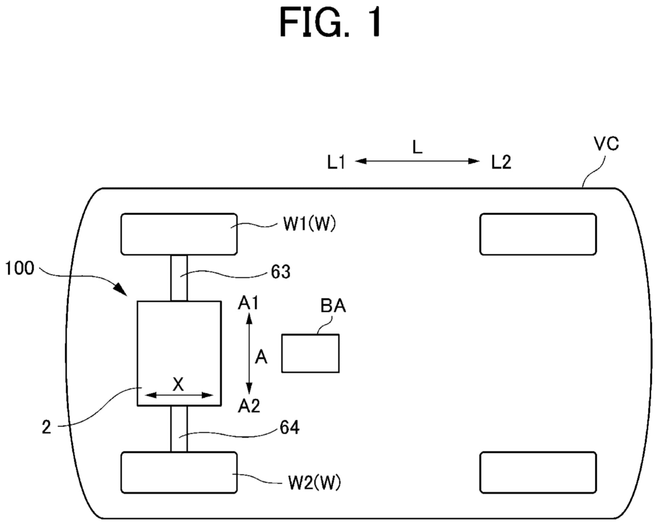

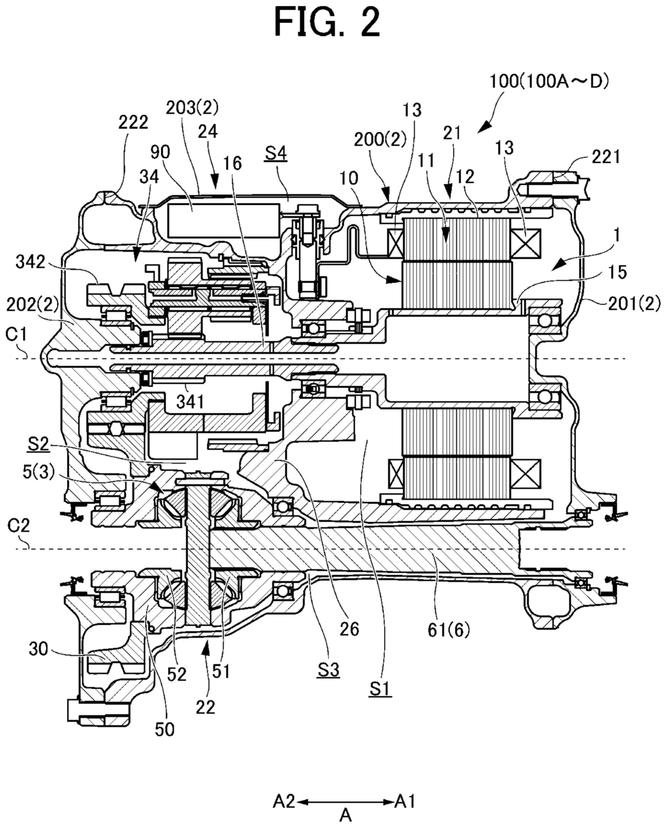

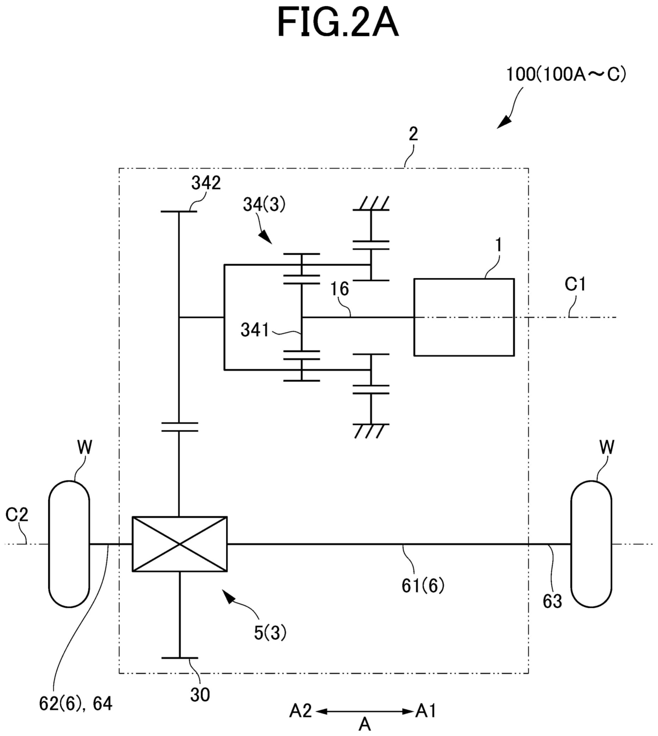

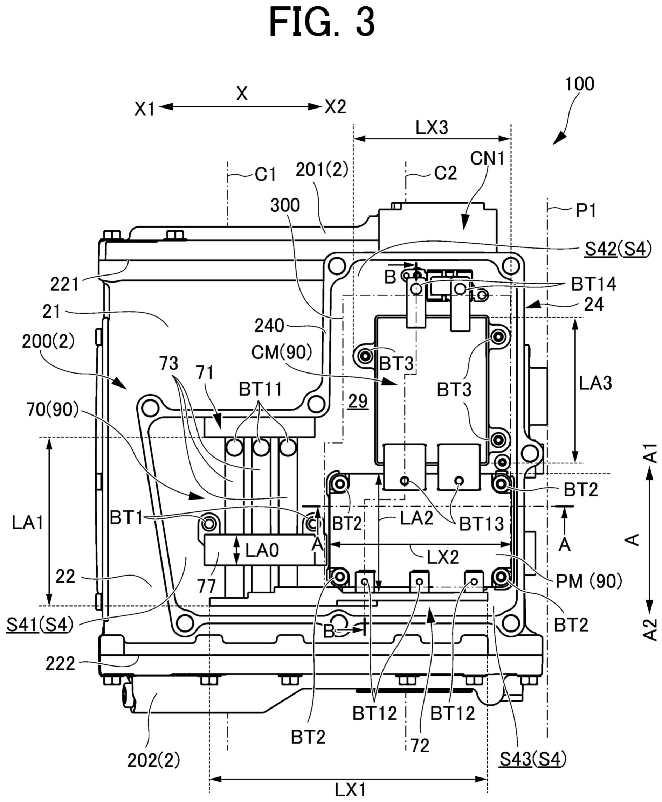

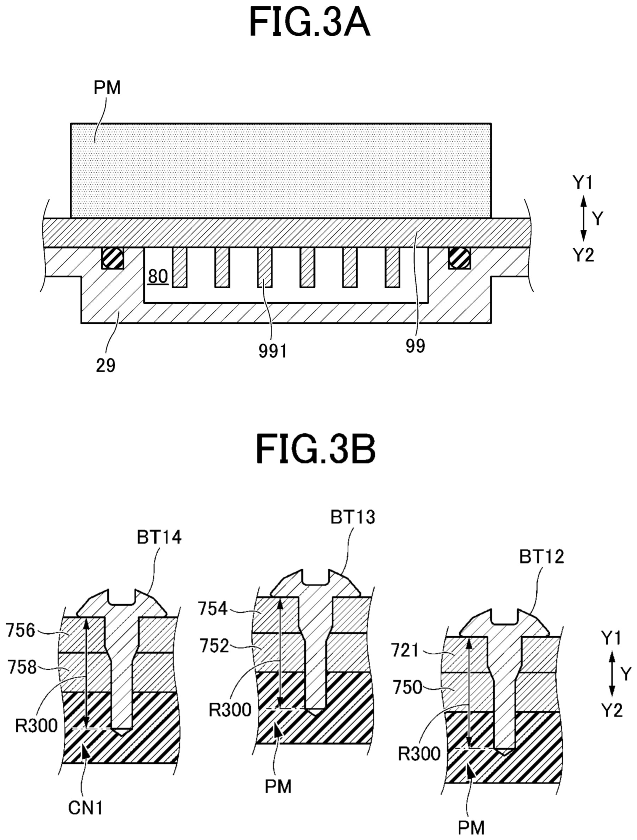

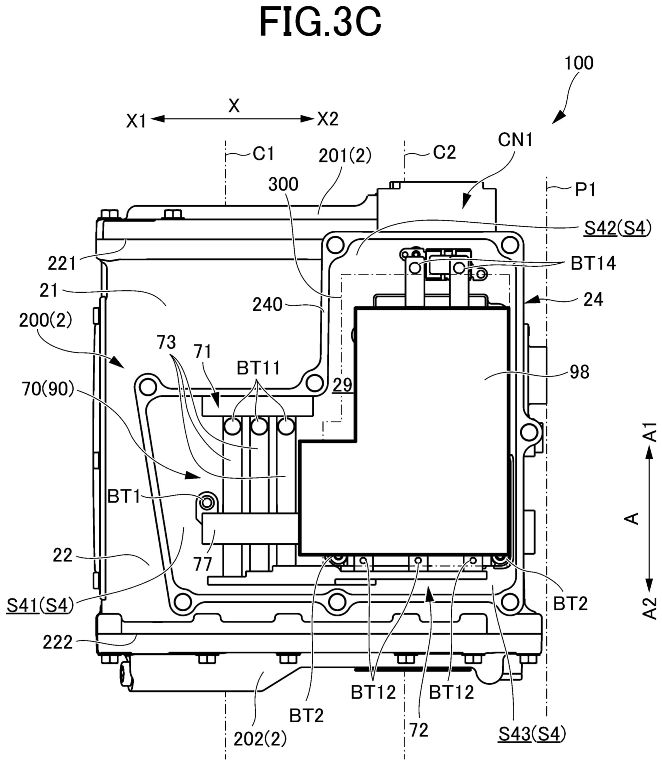

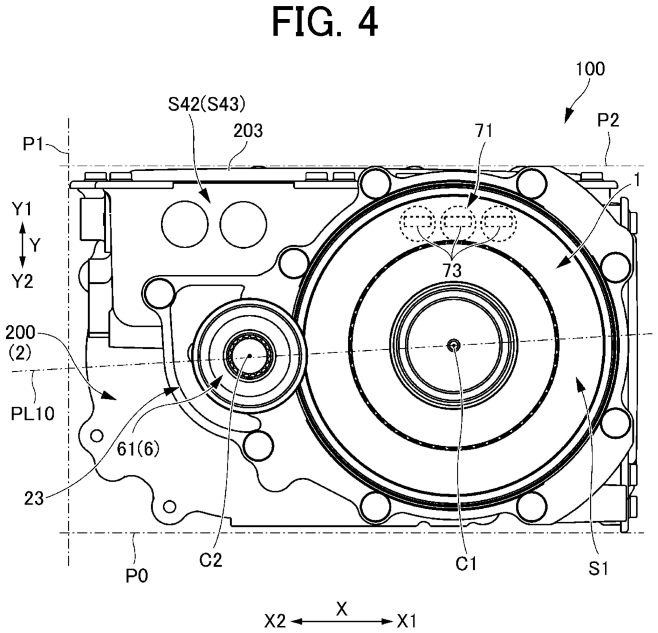

FIG. 1 is a top-view schematic diagram showing a mounted state of the vehicle drive device 100 in a vehicle VC. FIG. 2 is a cross-sectional view of relevant parts of the vehicle drive device 100. FIG. 2A is a skeleton diagram showing the vehicle drive device 100. FIG. 3 is a top view schematically showing the vehicle drive device 100 according to the present embodiment. FIG. 3A is a cross-sectional view schematically showing a water passage structure between a partition portion 29 and a power module PM, the water passage structure being shown as taken along line A-A in FIG. 3. FIG. 3B is a cross-sectional view schematically and partially showing fastening structures between various bus bars, as taken along line B-B in FIG. 3. FIG. 3C is a top view schematically showing the vehicle drive device 100 according to the present embodiment, and is a view showing a control board 98 unlike FIG. 3. FIG. 4 is a side view schematically showing the vehicle drive device 100 according to the present embodiment. In FIG. 3, illustration of an inverter cover member 203 on an upper portion of an inverter case portion 24 is omitted such that elements disposed inside the inverter case portion 24 can be seen. In addition, in FIG. 3, illustration of the control board 98 is omitted such that elements disposed on a second-direction second side Y2 of the control board 98 (see FIG. 3C) can be seen.

In FIGS. 3 and 4, a first direction X, a second direction Y, and an axial direction A are defined. The first direction X, the second direction Y, and the axial direction A are directions of three axes orthogonal to each other, and the second direction Y has a component in an upper-lower direction. In this case, the second direction may be parallel to the gravity direction (vertical direction) or may be inclined relative to the gravity direction (vertical direction), in a state where the vehicle drive device 100 is mounted in the vehicle VC. For example, the vehicle drive device 100 may be mounted in the vehicle VC in an orientation in which a second-direction first side Y1 corresponds to an upper side and the second-direction second side Y2 corresponds to a lower side. In addition, the vehicle drive device 100 may be mounted in the vehicle VC in an orientation in which a first-direction first side X1 corresponds to a front side L1 (a front side in a vehicle front-rear direction L) and a first-direction second side X2 corresponds to a rear side L2 (a rear side in the vehicle front-rear direction L). As shown in FIG. 1, the vehicle drive device 100 may be mounted on the front side L1 with respect to a middle portion of the vehicle VC in the vehicle front-rear direction L. Note that in a case where the vehicle drive device 100 is mounted on the rear side L2 with respect to the middle portion of the vehicle VC in the vehicle front-rear direction L, a configuration can be made in which an inverter device 90 is disposed on a middle side in the vehicle front-rear direction L with respect to a rotary electric machine 1 by mounting the vehicle drive device 100 in the vehicle VC in an orientation in which the first-direction first side X1 corresponds to the rear side L2 and the first-direction second side X2 corresponds to the front side L1. In the case where the vehicle drive device 100 is mounted on the rear side L2 with respect to the middle portion of the vehicle VC in the vehicle front-rear direction L in this manner, a pair of wheels W driven by the vehicle drive device 100 may be, for example, a pair of left and right rear wheels.

In a case where the vehicle VC includes a pair of left and right front wheels and a pair of left and right rear wheels, a configuration can also be made in which one pair, of the pair of left and right front wheels and the pair of left and right rear wheels, that is not driven by the vehicle drive device 100 (in the example shown in FIG. 1, the pair of left and right rear wheels) is driven by a drive device other than the vehicle drive device 100. The drive device other than the vehicle drive device 100 is, for example, a drive device configured to transmit output torque of an internal combustion engine to a pair of wheels to be driven, a drive device configured to transmit output torque of a rotary electric machine (a rotary electric machine different from the rotary electric machine 1 included in the vehicle drive device 100) to a pair of wheels to be driven, or a drive device configured to transmit output torque of both an internal combustion engine and a rotary electric machine (a rotary electric machine different from the rotary electric machine 1 included in the vehicle drive device 100) to a pair of wheels to be driven. The drive device other than the vehicle drive device 100 can also be a drive device having the same configuration as the configuration of the vehicle drive device 100.

In the present embodiment, as schematically shown in FIG. 2A, the vehicle drive device 100 includes the rotary electric machine 1, a pair of output members 6 drivingly coupled to the pair of wheels W (see FIG. 1), a transmission mechanism 3 that transmits drive power between the rotary electric machine 1 and the pair of output members 6, and the inverter device 90 that performs drive control on the rotary electric machine 1. The vehicle drive device 100 further includes a case 2 that houses the rotary electric machine 1 and the inverter device 90. The case 2 also houses the pair of output members 6 and the transmission mechanism 3.

A first output member 61, which is one of the pair of output members 6, is drivingly coupled to a first wheel W1, which is one of the pair of wheels W, and a second output member 62, which is the other one of the pair of output members 6, is drivingly coupled to a second wheel W2, which is the other one of the pair of wheels W. As shown in FIG. 1, the vehicle VC in which the vehicle drive device 100 is mounted includes a first drive shaft 63 that rotates together with the first wheel W1 and a second drive shaft 64 that rotates together with the second wheel W2. The first drive shaft 63 is coupled to the first wheel W1 via, for example, a constant-velocity joint, and the second drive shaft 64 is coupled to the second wheel W2 via, for example, a constant-velocity joint. Moreover, the first output member 61 is coupled to the first drive shaft 63 to rotate together with the first drive shaft 63, and the second output member 62 is coupled to the second drive shaft 64 to rotate together with the second drive shaft 64.

The vehicle drive device 100 transmits output torque of the rotary electric machine 1 to the pair of wheels W via the pair of output members 6 to cause the vehicle VC in which the vehicle drive device 100 is mounted to travel. That is, the rotary electric machine 1 is a drive power source for the pair of wheels W. The pair of wheels W are a pair of left and right wheels (for example, a pair of left and right front wheels or a pair of left and right rear wheels) in the vehicle VC. The rotary electric machine 1 may be, for example, an alternating-current rotary electric machine driven by three-phase alternating current. The rotary electric machine 1 is electrically connected to a battery BA (including an electric storage device such as a capacitor) via the inverter device 90 that performs electric power conversion between direct-current power and alternating-current power. The rotary electric machine 1 receives electric power supply from the battery BA to perform power running, or supplies electric power generated through inertial force or the like of the vehicle VC to the electric storage device to cause the electric storage device to store the electric power.

As shown in FIG. 2, the rotary electric machine 1 and the pair of output members 6 are disposed separately on two axes (specifically, a first axis C1 and a second axis C2) parallel to each other. Specifically, the rotary electric machine 1 is disposed on the first axis C1, and the pair of output members 6 are disposed on the second axis C2 different from the first axis C1. The first axis C1 and the second axis C2 are axes (imaginary axes) arranged parallel to each other. The transmission mechanism 3 includes an output gear (ring gear) 30 drivingly coupled to at least one of the pair of output members 6, coaxially with the pair of output members 6 (that is, on the second axis C2).

As shown in FIG. 1, the vehicle drive device 100 is mounted in the vehicle VC in an orientation in which the axial direction A is along a vehicle left-right direction. The axial direction A is a direction parallel to the first axis C1 and the second axis C2, that is, an axial direction common between the first axis C1 and the second axis C2. That is, the axial direction A is a direction in which the rotation axis of the rotary electric machine 1 extends, and is also a direction in which the rotation axis of the pair of output members 6 extends. Here, one side in the axial direction A is defined as an axial first side A1, and the other side in the axial direction A (a side opposite to the axial first side A1 in the axial direction A) is defined as an axial second side A2. The axial first side A1 is a side on which the rotary electric machine 1 is disposed with respect to the transmission mechanism 3 in the axial direction A. As shown in FIG. 2, the first output member 61 is the output member 6 disposed on the axial first side A1 out of the pair of output members 6, and the second output member 62 is the output member 6 disposed on the axial second side A2 out of the pair of output members 6.

As shown in FIG. 1, the vehicle drive device 100 may be mounted in the vehicle VC in an orientation in which the axial first side A1 corresponds to the vehicle right side and the axial second side A2 corresponds to the vehicle left side. In this case, the first wheel W1 to which the first output member 61 is drivingly coupled is a right wheel, and the second wheel W2 to which the second output member 62 is drivingly coupled is a left wheel. In FIG. 1, a case is assumed in which the vehicle drive device 100 is a front-wheel-drive-type drive device that drives a pair of left and right front wheels. Therefore, in the example shown in FIG. 1, the first wheel W1 is the right front wheel, and the second wheel W2 is the left front wheel.

As shown in FIG. 2, the rotary electric machine 1 includes a rotor 10 and a stator 11. The stator 11 is fixed to the case 2, and the rotor 10 is supported by the case 2 to be rotatable relative to the stator 11. The rotary electric machine 1 may be a rotary electric machine of an inner rotor type, and in this case, the rotor 10 may be arranged on an inner side in a radial direction with respect to the stator 11 to overlap the stator 11 as viewed in the radial direction along the radial direction. The radial direction here is a radial direction based on the first axis C1, that is, a radial direction based on the rotation axis of the rotary electric machine 1.

The stator 11 includes a stator core 12 and coil end portions 13 protruding from the stator core 12 in the axial direction A. Coils are wound on the stator core 12, and portions of the coils protruding from the stator core 12 in the axial direction A form the coil end portions 13. The coil end portions 13 are formed on both sides in the axial direction A with respect to the stator core 12.

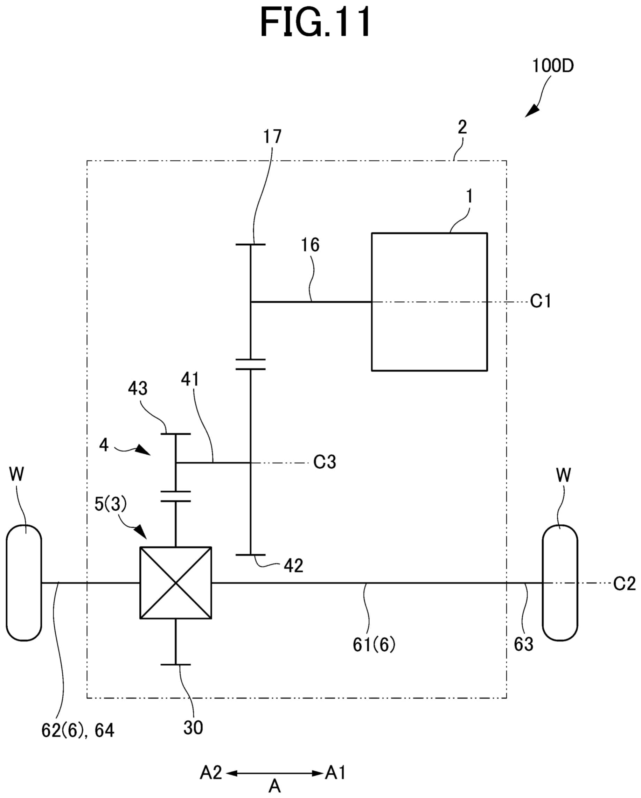

The transmission mechanism 3 includes a reduction mechanism 34 in a power transmission path between the rotary electric machine 1 and the output gear 30. The reduction mechanism 34 is of any type, and may include a reduction mechanism using a counter gear, a reduction mechanism using a planetary gear, or the like. In the present embodiment, as an example, the reduction mechanism 34 includes a planetary gear mechanism, and the reduction mechanism 34 is disposed coaxially with the rotary electric machine 1. An output gear (carrier) 342 of the reduction mechanism 34 meshes with the output gear 30 of a differential gear mechanism 5 in the radial direction. Such a vehicle drive device 100 can have a compact configuration including two axes (the first axis C1 and the second axis C2). Note that in a modification, the vehicle drive device 100 may have three or more axes (described later with reference to FIG. 11).

In the present embodiment, the reduction mechanism 34 is disposed coaxially with the rotary electric machine 1 (that is, on the first axis C1) while being drivingly coupled to the rotary electric machine 1. An input member 16 that meshes with a sun gear 341 of the reduction mechanism 34 is coupled to the rotor 10 to rotate together with the rotor 10. In the example shown in FIG. 2, the vehicle drive device 100 includes a rotor shaft 15 on which the rotor 10 is fixed, and the input member 16 is coupled to the rotor shaft 15 to rotate together with the rotor shaft 15. Specifically, a portion of the input member 16 on the axial first side A1 may be coupled (here, spline-coupled) to a portion of the rotor shaft 15 on the axial second side A2. Unlike such a configuration, a configuration can also be made in which the rotor shaft 15 of the vehicle drive device 100 is formed integrally with the input member 16 as one piece.

In addition, the transmission mechanism 3 further includes the differential gear mechanism 5. The differential gear mechanism 5 distributes drive power transmitted from the rotary electric machine 1 side, to the pair of output members 6. The differential gear mechanism 5 may be disposed coaxially with the pair of output members 6 (that is, on the second axis C2). The differential gear mechanism 5 distributes drive power transmitted from the rotary electric machine 1 side to the output gear 30, to the pair of output members 6. That is, the output gear 30 is drivingly coupled to both of the pair of output members 6 via the differential gear mechanism 5. Note that the differential gear mechanism 5 may be a differential gear mechanism of a bevel gear type, and the output gear 30 may be coupled to a differential case portion 50 included in the differential gear mechanism 5 to rotate together with the differential case portion 50.

In the example shown in FIG. 2, the differential gear mechanism 5 distributes rotation of the output gear 30 to a first side gear 51 and a second side gear 52. The first side gear 51 rotates together with the first output member 61, and the second side gear 52 rotates together with the second output member 62. The first side gear 51 may be formed in a member different from a member (here, a shaft member) forming the first output member 61, and may be coupled (here, spline-coupled) to the first output member 61 to rotate together with the first output member 61. At least a portion of the first output member 61 on the axial first side A1 is formed in a tubular shape (specifically, cylindrical shape) extending in the axial direction A, and the first drive shaft 63 (see FIG. 1) may be inserted into the inside of the first output member 61 (a space surrounded by an inner peripheral surface thereof) from the axial first side A1. In addition, the second output member 62 may be coupled to the second side gear 52. Note that the second output member 62 may be implemented by the second drive shaft 64.

In the present embodiment, the output gear 30 of the differential gear mechanism 5 is preferably disposed near an end portion of the case 2 on the axial second side A2. In this case, a gear (not shown) of the reduction mechanism 34 that meshes with the output gear 30 may be disposed closest to the axial second side A2 in the reduction mechanism 34. In this case, the output gear 30 can be arranged closer to the axial second side A2 in the entire vehicle drive device 100.

Incidentally, in the vehicle drive device 100, the rotary electric machine 1 can have the largest size in the second direction as viewed in the axial direction. Note that the size of the rotary electric machine 1 is determined in accordance with required output or the like. Therefore, in order to reduce the overall size of the vehicle drive device 100 in the second direction, it is beneficial to arrange main components (main components other than the rotary electric machine 1) of the vehicle drive device 100 to overlap the rotary electric machine 1 as viewed in the first direction X. In particular, in a case where the vehicle drive device 100 includes the output gear 30 having a relatively large outer diameter, a positional relationship between the output gear 30 and the rotary electric machine 1 may significantly affect the overall size of the vehicle drive device 100 in the second direction.

In consideration of this point, the pair of output members 6 concentric with the central axis of the output gear 30 are preferably arranged to overlap the rotor shaft 15 of the vehicle drive device 100 as viewed in the first direction. In this case, the positional relationship between the output gear 30 and the rotary electric machine 1 may be set such that an outer shape of the output member 6 (for example, an outer shape portion having a circular shape) overlaps an outer shape of the rotor shaft 15 (for example, an outer shape portion having a circular shape) as viewed in the first direction. By arranging the output gear 30 and the rotary electric machine 1 in such a positional relationship, it is possible to reduce or eliminate the influence of the output gear 30 over the overall size of the vehicle drive device 100 in the second direction. That is, since the overall size of the vehicle drive device 100 in the second direction is determined substantially by the size of the rotary electric machine 1 (and the size of a motor case portion 21 accordingly), the overall size of the vehicle drive device 100 in the second direction can be minimized under the condition in which the size of the rotary electric machine 1 is kept the same.

In the present embodiment, the case 2 includes the motor case portion 21, a transmission mechanism case portion 22, an output shaft case portion 23, and the inverter case portion 24 in an integrated form. Here, the "integrated form" includes a form integrated by using a fastening member such as a bolt, or a form integrated by being integrally formed (for example, by casting or casting using aluminizing or the like).

The motor case portion 21 forms a motor housing chamber S1 that houses the rotary electric machine 1, the transmission mechanism case portion 22 forms a transmission mechanism housing chamber S2 that houses the transmission mechanism 3, the output shaft case portion 23 forms an output shaft housing chamber S3 that houses the first output member 61, and the inverter case portion 24 forms an inverter housing chamber S4 that houses the inverter device 90. Note that the fact that the motor case portion 21 forms the motor housing chamber S1 means that a wall portion bounding the motor housing chamber S1 forms the motor case portion 21. The similar applies to the transmission mechanism housing chamber S2, the output shaft case portion 23, and the inverter case portion 24.

The motor case portion 21 has a cylindrical shape corresponding to the outer shape of the rotary electric machine 1. However, the entire cylindrical outer peripheral portion of the motor case portion 21 is not necessarily closed. For example, the motor housing chamber S1 and the output shaft housing chamber S3 may communicate with each other, and in this case, a wall portion need not be formed on a side in the motor case portion 21 facing the output shaft housing chamber S3.

The transmission mechanism case portion 22 is provided on the axial second side A2 with respect to the motor case portion 21 and the output shaft case portion 23. The output shaft case portion 23 is provided on the first-direction second side X2 with respect to the motor case portion 21. The inverter case portion 24 is provided on an upper side of the transmission mechanism case portion 22 and the output shaft case portion 23. Details of the inverter case portion 24 will be described later.

In the present embodiment, since the output shaft case portion 23 is provided, the first output member 61 can be effectively protected from an external environment (for example, a flying stone or the like) as compared with a case in which the first output member 61 is provided outside the case 2. In addition, a clearance to be maintained between the first output member 61 and the peripheral components can be reduced. However, in a modification, the first output member 61 may be provided outside the case 2.

Note that the case 2 may be formed by joining a plurality of members (a case member and a cover member). Therefore, one case member that forms the case 2 may form two or more case portions among the motor case portion 21, the transmission mechanism case portion 22, the output shaft case portion 23, and the inverter case portion 24.

In addition, the motor housing chamber S1, the transmission mechanism housing chamber S2, and the output shaft housing chamber S3 formed by the case 2 may be completely isolated from each other, may partially communicate with each other, or may be formed as a common housing chamber while having no boundary. For example, the motor housing chamber S1 and the output shaft housing chamber S3 may be formed as a common housing chamber while having no partition that separates each other. In this case, the rotary electric machine 1 and the first output member 61 are housed in a common housing chamber (specifically, the motor housing chamber S1 and the output shaft housing chamber S3) formed by the case 2. In addition, in a case where the rotary electric machine 1 is subjected to oil cooling, the motor housing chamber S1 and the inverter housing chamber S4 may be separated from each other, but in a case where the rotary electric machine 1 is subjected to water cooling, the motor housing chamber S1 and the inverter housing chamber S4 need not be separated from each other.

In the present embodiment, as an example, the inverter housing chamber S4 is separated from the motor housing chamber S1 and the transmission mechanism housing chamber S2 by the partition portion 29. The partition portion 29 forms a bottom portion (boundary portion on the second-direction second side Y2) of the inverter housing chamber S4.

In the following description, as an example, the case 2 is formed by joining a case member 200, a motor cover member 201, a differential cover member 202, and the inverter cover member 203. Note that the joining method may be fastening with a bolt or the like.

The case member 200 may be formed as a one-piece member (for example, one member formed by a die casting method and having a common material). In this case, the motor housing chamber S1 and the transmission mechanism housing chamber S2 may be separated by one partition 26.

The case member 200 is opened in the axial direction A on the axial first side A1, and is opened in the axial direction A on the axial second side A2.

The motor cover member 201 is provided to cover an opening on the axial first side A1 in the case member 200 (that is, an opening of the motor housing chamber S1 on the axial first side A1). The motor cover member 201 may be formed as a one-piece member. The motor cover member 201 may be joined to an end surface (joint surface) of the case member 200 on the axial first side A1. In this case, a joint surface (mating surface) 221 between the motor cover member 201 and the case member 200 may extend in a plane perpendicular to the axial direction A.

The differential cover member 202 is provided to cover an opening on the axial second side A2 in the case member 200 (that is, an opening of the transmission mechanism housing chamber S2 on the axial second side A2). The differential cover member 202 may be formed as a one-piece member. The differential cover member 202 may be joined to an end surface (joint surface) of the case member 200 on the axial second side A2. In this case, a joint surface (mating surface) 222 between the differential cover member 202 and the case member 200 may extend in a plane perpendicular to the axial direction A.

The inverter cover member 203 is provided to cover an opening of the inverter housing chamber S4 in the case member 200. The inverter cover member 203 may be disposed to face the partition portion 29 in the second direction Y. The inverter cover member 203 may be formed as a one-piece member.

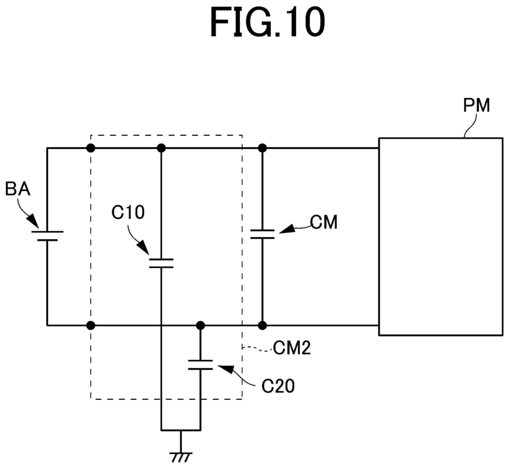

The inverter device 90 includes the power module PM (described later), the control board 98 (see FIG. 3C), a smoothing capacitor CM (described later) that smooths a voltage between positive and negative electrodes on a direct-current side of an inverter circuit, and a bus bar module 70. In addition, the inverter device 90 may further include various types of sensors such as a current sensor, a filter such as a Y capacitor (see a Y capacitor CM2 in FIG. 10), various types of wiring (including a connector or the like), and the like.

On the control board 98, a control device or the like that controls the inverter circuit formed by the power module PM, a sensor, and the like are mounted. The control board 98 may be, for example, a multilayer board. The control board 98 may be disposed in an orientation in which the second direction Y corresponds to a direction normal to a surface of the board. In the present embodiment, as shown in FIG. 3C, the control board 98 may be disposed so as to cover the power module PM and the smoothing capacitor CM from the second-direction first side Y1. The control board 98 may be directly supported by the partition portion 29, or may be supported by the partition portion 29 via the power module PM or the smoothing capacitor CM.

The control board 98 extends in the inverter housing chamber S4. That is, the control board 98 extends on the second-direction second side Y2 with respect to an end surface, on the second-direction first side Y1, of a side wall portion 240 to be described later. Note that in the example shown in FIG. 3C, the control board 98 is disposed so as to mainly cover the power module PM and the smoothing capacitor CM from the second-direction first side Y1, but may be disposed so as to cover the power module PM and the bus bar module 70 from the second-direction second side Y2. In addition, the control board 98 may be formed of two or more boards.

The power module PM may be in the form of a module formed of a plurality of switching elements (power semiconductor elements, not shown) forming the inverter circuit with the plurality of switching elements subjected to resin molding. The power module PM is fixed to the partition portion 29 with fasteners BT2 such as bolts.

In the present embodiment, the power module PM is in the form of a module including a plurality of switching elements forming the inverter circuit and including some of water passage forming members for cooling the plurality of switching elements. Specifically, as shown in FIG. 3A, the power module PM includes a heat dissipation plate 99. The heat dissipation plate 99 forms a cooling water passage 80 for cooling the plurality of switching elements (power semiconductor elements, not shown) forming the inverter circuit. The heat dissipation plate 99 forms the cooling water passage 80 between the heat dissipation plate 99 and the partition portion 29. That is, the heat dissipation plate 99 forms the cooling water passage 80 in cooperation with a portion of the partition portion 29. Cooling water is caused to circulate through the cooling water passage 80. Thus, heat from each switching element of the power module PM can be efficiently dissipated via the cooling water, while the size in the second direction Y is reduced, as compared with a case in which the entire cooling water passage is embedded in the power module PM. The heat dissipation plate 99 preferably includes a plurality of fins 991 protruding in the second direction Y toward the second-direction second side Y2. Thus, heat dissipation efficiency can be increased.

The smoothing capacitor CM may be in the form of a module formed of a plurality of capacitor elements and a plurality of terminals with the plurality of capacitor elements and the plurality of terminals subjected to resin molding. The smoothing capacitor CM is fixed to the partition portion 29 with fasteners BT3 such as bolts.

The bus bar module 70 is a wiring part that electrically connects the rotary electric machine 1 and the power module PM. The bus bar module 70 may be in the form of a module, and is fixed to the partition portion 29 with fasteners BT1 such as bolts. Note that in the present embodiment, the bus bar module 70 is in the form of a module integrated also with a current sensor module 77, and the bus bar module 70, together with the current sensor module 77, is directly fastened to the partition portion 29. However, in a modification, the bus bar module 70 may be directly fastened to the partition portion 29 separately from the current sensor module 77. The current sensor module 77 includes three current sensors that detect respective currents flowing through three-phase bus bars of the bus bar module 70. Note that each of the current sensors may be, for example, a coreless-type current sensor. The coreless-type current sensor does not include a magnetic core and can be downsized accordingly, and can contribute to downsizing of the current sensor module 77. The current sensor module 77 may be a configuration in which, for example, a primary conductor, a magnetic sensor, and an IC (for example, an application specific integrated circuit: ASIC) are packaged with an insulating material. Note that as used herein, a manner in which a certain member is "directly" fastened to the partition portion 29 refers to a manner in which this member is fastened to the partition portion 29 without via another member.

The bus bar module 70 includes a first terminal part 71 connected to a power line (not shown) of the rotary electric machine 1 for each phase of the rotary electric machine 1, a second terminal part 72 electrically connected to the power module PM, and bus bars 73 extending between the first terminal part 71 and the second terminal part 72. Further details of the bus bar module 70 will be described later.

In the present embodiment, as schematically shown in FIG. 3, the power module PM, the smoothing capacitor CM, and the bus bar module 70 are directly fastened to the partition portion 29 at respective fastening positions not overlapping each other as viewed in the second direction Y. That is, the fasteners BT1 to BT3 do not overlap each other as viewed in the second direction Y. Each of the fasteners BT1 to BT3 includes a shaft portion along the second direction Y, and is fastened in a manner to travel toward the second-direction second side Y2 along the second direction Y at the time of fastening.

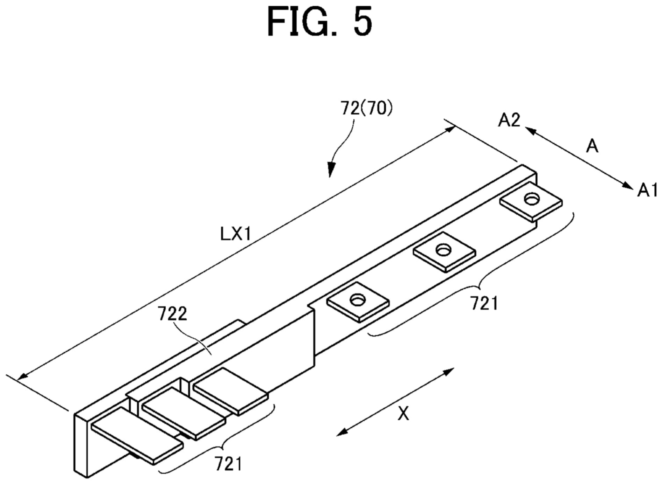

Therefore, according to the present embodiment, the power module PM, the smoothing capacitor CM, and the bus bar module 70 can be arranged in such a manner not to overlap each other as viewed in the second direction Y. That is, when the power module PM, the smoothing capacitor CM, and the bus bar module 70 are viewed in the second direction Y, respective portions (for example, body portions sealed with resin), of the power module PM, the smoothing capacitor CM, and the bus bar module 70, different from respective electrical connection portions (for example, a terminal-side bus bar 721 shown in FIG. 5, and the like) thereof can be arranged in respective different regions on the partition portion 29. Thus, for example, the size in the second direction Y related to the inverter device 90 can be reduced as compared with a case in which at least two of the power module PM, the smoothing capacitor CM, and the bus bar module 70 are arranged while being stacked in the second direction Y. As a result, the size of the case 2 (and the vehicle drive device 100 accordingly) in the second direction Y can be reduced.

Further, according to the present embodiment, the power module PM, the smoothing capacitor CM, and the bus bar module 70 can be directly fastened to the partition portion 29 independently of each other, and thus working efficiency at the time of assembling can be increased. For example, inefficiency occurs in a configuration where main components of an inverter device are fixed to a housing member and the housing member is fixed to a housing body portion as in the technique described in Patent Literature 1, because work of fixing the housing member to the housing body portion is added. Moreover, the power module PM, the smoothing capacitor CM, and the bus bar module 70 can be independently removed from the partition portion 29, and maintainability can be increased.

The power module PM, the smoothing capacitor CM, and the bus bar module 70 are electrically connected between the rotary electric machine 1 and a connector CN1 via fasteners BT11 to BT14. Each of the fasteners BT11 to BT14 includes a shaft portion along the second direction Y, and is fastened in a manner to travel toward the second-direction second side Y2 along the second direction Y at the time of fastening. The fasteners BT11 to BT14 are fastened at respective fastening positions not overlapping each other as viewed in the second direction Y.

Specifically, the fastener BT11 fastens electrical connection portions between the bus bar module 70 and the rotary electric machine 1 (electrical connection portions between the bus bar 73 and the first terminal part 71). The fastener BT12 fastens electrical connection portions between the bus bar module 70 and the power module PM. FIG. 3B schematically shows a bus bar terminal (an end portion of the terminal-side bus bar 721 in FIG. 5) on the bus bar module 70 side and a bus bar terminal 750 on the power module PM side. In addition, the fastener BT13 fastens electrical connection portions between the power module PM and the smoothing capacitor CM. FIG. 3B schematically shows a bus bar terminal 752 on the power module PM side and a bus bar terminal 754 on the smoothing capacitor CM side. In addition, the fastener BT14 fastens electrical connection portions between the smoothing capacitor CM and the connector CN1. FIG. 3B schematically shows a bus bar terminal 756 on the smoothing capacitor CM side and a bus bar terminal 758 on the connector CN1 side.

In the present embodiment, the fasteners BT11 to BT14 related to the electrically connected portions in the inverter device 90 overlap each other as viewed in a direction perpendicular to the second direction Y, as schematically shown for the fasteners BT12 to BT14 in FIG. 3B. That is, the fasteners BT11 to BT14 overlap each other in respective extending ranges R300 thereof in the second direction Y. Thus, there is no significant protrusion of some fastening portions, among fastening portions related to the fasteners BT11 to BT14, toward the second-direction first side Y1 side, and a possibility of an increase in the size in the direction Y due to some fastening portions can be reduced. In addition, the fasteners BT11 to BT14 can be fastened under substantially the same conditions, which improves production efficiency and facilitates torque management at the time of fastening. Note that an overlapping portion between the fasteners BT11 to BT14 is simply required to be at least a portion of each of the fasteners BT11 to BT14, and may be, for example, an effective thread portion thereof.

Next, with further reference to FIG. 3 and subsequent drawings, characteristic configurations related to arrangement, size (dimensional relationship), and wiring structure (three-phase wiring structure) of the inverter device 90 according to the present embodiment will be described.

FIG. 5 is a perspective view of the second terminal part 72 of the bus bar module 70 of the vehicle drive device 100 of the present embodiment.

As described above, the inverter device 90 is housed in the inverter housing chamber S4 of the inverter case portion 24. The inverter device 90 mainly includes the power module PM, the smoothing capacitor CM, and the bus bar module 70. In FIG. 3, the arrangement region of the power module PM and the smoothing capacitor CM is indicated by a boxed region 300 of a dash-dotted line.

In the present embodiment, the inverter case portion 24 is arranged so as to overlap the first axis C1 and the second axis C2 in top view (view as viewed in the second direction Y, the same applies hereinafter).

The inverter housing chamber S4 includes a first housing portion S41, a second housing portion S42, and a third housing portion S43. Hereinafter, in the description of the arrangement of the first housing portion S41, the second housing portion S42, and the third housing portion S43, part or entirety of a space that is between line P1 and line P2 in the upper-lower direction and in which no component other than the inverter case portion 24 is arranged is also referred to as a "dead space".

As shown in FIG. 3, the inverter housing chamber S4 has an L-shape in the top view. Specifically, when the middle in the direction X is set between the first axis C1 and the second axis C2 in the direction X, the inverter housing chamber S4 extends on both sides in the direction X with respect to the middle in the direction X while straddling the middle in the direction X. In addition, when the middle in the direction A is set between the rotary electric machine 1 and the reduction mechanism 34 in the direction A, the inverter housing chamber S4 extends on both sides in the direction A with respect to the middle in the direction A while straddling the middle in the direction A, on the first-direction second side X2. On the other hand, the inverter housing chamber S4 extends only on the axial second side A2 with respect to the middle in the direction A, on the first-direction first side X1.

More specifically, the first housing portion S41, the second housing portion S42, and the third housing portion S43 are arranged in an L-shape as a whole in the top view, as shown in FIG. 3. In this instance, the first housing portion S41 overlaps the first axis C1 (that is, the reduction mechanism 34) on the axial second side A2 in the top view, and overlaps the rotary electric machine 1 as viewed in the axial direction A. In addition, the second housing portion S42 overlaps the second axis C2 in the top view, and overlaps the rotary electric machine 1 as viewed in the first direction X. The third housing portion S43 is adjacent to the first housing portion S41 and the second housing portion S42, and overlaps the second axis C2 in the top view. Note that the third housing portion S43 may integrally communicate with the first housing portion S41 and the second housing portion S42.

The first housing portion S41, the second housing portion S42, and the third housing portion S43 are arranged on an upper side with respect to plane PL10 including the first axis C1 that is the axis of the rotation shaft of the rotary electric machine 1 and the second axis C2 that is the axis of the output member 6. Note that in the present embodiment, as described above, an offset amount in the second direction Y between the central axis of the output gear 30 (that is, the second axis C2) and the central axis of the rotary electric machine 1 (that is, the first axis C1) is set to be relatively small, and thus plane PL10 is a plane close to the horizontal plane.

The first housing portion S41, the second housing portion S42, and the third housing portion S43 are preferably formed so as not to affect the overall size of the case 2 in the second direction Y, in order to prevent an increase in the overall size of the case 2. In the present embodiment, the overall size of the case 2 in the second direction Y is determined by the size of the rotary electric machine 1 in the second direction Y (see lines P0 and P2 in FIG. 4), and, specifically, is determined by the size of the motor case portion 21 in the second direction Y. Therefore, the first housing portion S41, the second housing portion S42, and the third housing portion S43 are arranged on the second-direction second side Y2 with respect to a position (see line P2 in FIG. 4) of the motor case portion 21 closest to the second-direction first side Y1. Specifically, the case 2 includes the side wall portion 240 bounding the inverter housing chamber S4 (the first housing portion S41, the second housing portion S42, and the third housing portion S43) with respect to the motor housing chamber S1 in a direction perpendicular to the second direction Y. The side wall portion 240 extends on the second-direction second side Y2 with respect to the highest position (line P2) of the motor case portion 21. In this case, the overall size of the case 2 in the second direction Y can be reduced. Note that an end surface of the side wall portion 240 on the second-direction first side Y1 may extend in the same plane perpendicular to the second direction Y, and may form a mating surface to which the inverter cover member 203 is attached. In this case, the inverter cover member 203 may also be arranged on the second-direction second side Y2 with respect to the highest position (line P2) of the motor case portion 21. In addition, regarding the side wall portion 240, bounding the inverter housing chamber S4 with respect to the motor housing chamber S1 in the direction perpendicular to the second direction Y means a manner in which a boundary between the inverter housing chamber S4 and the motor housing chamber S1 is formed in the direction perpendicular to the second direction Y (the direction X, the direction A, or a direction formed by any combination thereof). In this case, a boundary position (a boundary position in the direction X, a boundary position in the direction A, or a boundary position in the direction formed by any combination thereof) need not be uniform at each position along the second direction Y. For example, a position, in the direction X, of a side wall portion, in the side wall portion 240, bounding the second housing portion S42 with respect to the motor housing chamber S1 may be located closer to the X1 side as it approaches the Y1 side along the second direction Y, in accordance with the outer shape of the rotary electric machine 1.

In addition, the first housing portion S41, the second housing portion S42, and the third housing portion S43 are preferably arranged between both end surfaces of the case member 200 in the axial direction A. That is, a substantially entirety of the first housing portion S41, the second housing portion S42, and the third housing portion S43 is preferably arranged to be within a range in the axial direction A between the joint surface (mating surface) 221, which is between the motor cover member 201 and the case member 200, and the joint surface (mating surface) 222, which is between the differential cover member 202 and the case member 200. In this case, it is easy to arrange the first housing portion S41, the second housing portion S42, and the third housing portion S43 in a manner not to affect the size in the axial direction A.

In addition, the first housing portion S41, the second housing portion S42, and the third housing portion S43 are preferably formed so as not to affect the overall size of the case 2 in the first direction X, in order to prevent an increase in the overall size of the case 2. In the present embodiment, a boundary (outer shape) on the first-direction second side X2 in the overall size of the case 2 in the first direction X may be determined by the size of the differential gear mechanism 5, and, specifically, may be determined by the size of the transmission mechanism case portion 22 in the first direction X. In addition, a boundary (outer shape) on the first-direction first side X1 in the overall size of the case 2 in the first direction X may be determined by the size of the rotary electric machine 1.

In this manner, according to the present embodiment, it is possible to reduce the overall size of the vehicle drive device 100 in the first direction X and the overall size of the vehicle drive device 100 in the second direction Y, that is, it is possible to reduce dimensions of the vehicle drive device 100 as viewed in the axial direction. Thus, mountability of the vehicle drive device 100 to the vehicle VC can be increased.

The respective dimensions of the first housing portion S41 and the third housing portion S43 in the second direction Y are any dimensions and may be the same dimension, as long as the first housing portion S41 and the third housing portion S43 are arranged on the second-direction second side Y2 with respect to line P2 described above. For example, determination for the first housing portion S41 and the third housing portion S43 may be made in different manners in accordance with respective components (described later) of the inverter device 90 to be housed in the first housing portion S41 and the third housing portion S43. In the present embodiment, as an example, the size of the rotary electric machine 1 is larger than the size of the output gear 30 as viewed in the axial direction, and thus a dead space (a space on the second-direction second side Y2 with respect to line P2) is more likely to be formed in a space around the first axis C1 and on the axial second side A2 with respect to the middle in the direction A, than a space around the second axis C2 and on the axial second side A2 with respect to the middle in the direction A. Therefore, the dimension (for example, the maximum dimension or the average dimension) of the third housing portion S43 in the second direction Y may be preferably set to be larger than this type of dimension of the motor housing chamber S1. The second housing portion S42 and the third housing portion S43 can be formed by efficiently using a space around the second axis C2 and on the second-direction second side Y2 with respect to line P2.

Here, the respective dimensions of the first housing portion S41, the second housing portion S42, and the third housing portion S43 in the second direction Y are any dimensions and may be the same dimension, as long as the first housing portion S41, the second housing portion S42, and the third housing portion S43 are located on the second-direction second side Y2 with respect to the highest position (line P2) of the motor case portion 21. However, the respective dimensions of the first housing portion S41, the second housing portion S42, and the third housing portion S43 in the second direction Y may be determined in different manners in accordance with respective components (described later) of the inverter device 90 to be housed in the first housing portion S41, the second housing portion S42, and the third housing portion S43. In other words, respective components to be arranged in the first housing portion S41, the second housing portion S42, and the third housing portion S43 may be determined in accordance with the respective maximum dimensions in the second direction Y that are allowable for the first housing portion S41, the second housing portion S42, and the third housing portion S43.

In this regard, in the present embodiment, among the components of the inverter device 90, the bus bar module 70 is arranged in the first housing portion S41, the smoothing capacitor CM is arranged in the second housing portion S42, and the power module PM is arranged in the third housing portion S43. In this instance, the bus bar module 70 and the power module PM are adjacent to each other in the first direction X, and the power module PM and the smoothing capacitor CM are adjacent to each other in the axial direction A. Note that the boundaries of the first housing portion S41, the second housing portion S42, and the third housing portion S43 need not be strict, and for example, a portion of the power module PM on the axial first side A1 may be arranged in the second housing portion S42, or a portion of the power module PM on the first-direction first side X1 may be arranged in the first housing portion S41. Note that with the arrangement described above of the first housing portion S41, the second housing portion S42, and the third housing portion S43, the bus bar module 70, the power module PM, and the smoothing capacitor CM overlap the rotary electric machine 1 as viewed in the direction perpendicular to the second direction Y.

Here, in the present embodiment, the reduction mechanism 34 arranged on the second-direction second side Y2 with respect to the first housing portion S41 includes the planetary gear mechanism, and a mounting space around the first axis C1 (a mounting space of the reduction mechanism 34) is relatively large. For example, as focused on the axial first side A1 with respect to the output gear 30 of the differential gear mechanism 5, a mounting space of the differential gear mechanism 5 tends to be smaller than a mounting space of the planetary gear mechanism.

In consideration of this point, in the present embodiment, the bus bar module 70 whose mounting space (dimension) in the second direction Y can be made relatively small is arranged in the first housing portion S41. In the present embodiment, in the bus bar module 70, the respective first terminal parts 71 of the three phases are arranged so as to be side by side in the first direction X, and the respective bus bars 73 of the three phases extend in the axial direction A so as not to overlap each other (so as to be side by side in the first direction X) as viewed in the upper-lower direction. Respective end portions, of the respective bus bars 73 of the three phases, on the axial first side A1 are coupled to the first terminal parts 71 with the fasteners BT11. Thus, the respective bus bars 73 of the three phases can be easily arranged even in a case where the dimension of a dead space in the second direction Y in a mounting range is relatively small. As a result, the case 2 can be downsized.

Further, in the present embodiment, the first terminal part 71 is formed in a manner to penetrate, in the axial direction A, through a portion, of the side wall portion 240, that separates the motor housing chamber S1 and the first housing portion S41 (see the first terminal part 71 and the like indicated by dotted lines in FIG. 4). Thus, the power lines (three-phase wires) of the rotary electric machine 1 can be led out to the inverter housing chamber S4 from the motor housing chamber S1 at a relatively short distance, and a wiring space can be reduced as compared with a case in which the power lines are led out to the inverter housing chamber S4 via the output shaft housing chamber S3 or the like. As a result, the case 2 can be downsized. Note that as shown in FIG. 4, the first terminal part 71, together with the bus bar 73, overlaps the rotary electric machine 1, as viewed in the axial direction (that is, is arranged in the dead space described above). In addition, the first terminal part 71 and the bus bar 73 do not overlap the output member 6 as viewed in the second direction Y. Note that in FIG. 4, the position of the first terminal part 71 as viewed in the axial direction is schematically indicated by the dotted lines.

Further, in the present embodiment, as an example, the size (the size in the radial direction) of the output gear 30 is significantly larger than the size of the output member 6 as viewed in the axial direction, and thus a dead space (a space on the second-direction second side Y2 with respect to line P2) is more likely to be formed on the axial first side A1 than on the axial second side A2, around the second axis C2. Therefore, the dimension (for example, the maximum dimension or the average dimension) of the second housing portion S42 in the second direction Y can be set to be larger than this type of dimension of the third housing portion S43.

In consideration of this point, in the present embodiment, as described above, the smoothing capacitor CM is arranged in the second housing portion S42, and the power module PM is arranged in the third housing portion S43. Thus, even in a case where the dimension of the smoothing capacitor CM in the second direction Y is significantly larger than the dimension of the power module PM in the second direction Y, the smoothing capacitor CM is easily housed in the second housing portion S42 in which the dimension in the second direction Y can be made relatively large. In this manner, according to the present embodiment, the smoothing capacitor CM and the power module PM can be efficiently arranged by efficiently using the dead space around the second axis C2 and on the second-direction second side Y2 with respect to line P2.

Further, in the present embodiment, the connector CN1 for a wire of a high-voltage system (a wire of a power supply system) through which the inverter device 90 receives electric power supplied from the high-voltage battery BA (see FIG. 1) may be provided on the axial first side A1 with respect to the second housing portion S42 as shown in FIG. 3. That is, the connector CN1 may be provided on a portion, of the side wall portion 240, bounding the axial first side A1 of the second housing portion S42. In this case, a current path from the high-voltage battery BA to the rotary electric machine 1 via the smoothing capacitor CM, the power module PM, and the bus bar module 70 can be efficiently set. That is, the current path from the high-voltage battery BA to the rotary electric machine 1 forms a C-shaped path (a path in the axial direction A on the first-direction second side X2, a path in the first direction X on the axial second side A2, and a path in the axial direction A on the first-direction first side X1) as viewed in the second direction Y. Thus, an efficient path can be formed in which unnecessary path, such as a folded-back path, does not substantially exist. Note that in a modification, the connector CN1 may be arranged on a portion, of the side wall portion 240, bounding the first-direction second side X2 of the second housing portion S42 (that is, may be arranged on the first-direction second side X2 and the axial first side A1 of the inverter case portion 24). Also in this case, an efficient path can be formed in which unnecessary path, such as a folded-back path, does not substantially exist.

Further, in the present embodiment, as described above, the dead space around the second axis C2 gradually increases from the axial second side A2 toward the axial first side A1. Therefore, the dimension of the inverter case portion 24 in the second direction Y (particularly, portions for the second housing portion S42 and the third housing portion S43) for the inverter device 90 can also be gradually increased from the axial second side A2 toward the axial first side A1 without changing a position of the inverter case portion 24 closest to the second-direction first side Y1. In this case, various components of the inverter device 90 may be arranged in the second housing portion S42 and the third housing portion S43 for the inverter case portion 24 in such an allocation manner that a component located on the axial first side A1 is a larger in dimension in the second direction Y than a component located on the axial second side A2. Note that in the present embodiment, the smoothing capacitor CM is larger in dimension in the second direction Y than the power module PM, and thus the smoothing capacitor CM is arranged in the second housing portion S42, and the power module PM is arranged in the third housing portion S43.

Incidentally, in the differential gear mechanism 5, the output gear 30 tends to be the largest among the components of the differential gear mechanism 5 with respect to the size around the second axis C2. Therefore, in a case where the output gear 30 in the differential gear mechanism 5 is arranged closer to the axial second side A2, a space on the axial first side A1 with respect to the output gear 30 in the space around the second axis C2 can be reserved in a state where the space is relatively wide in the radial direction and continuous in the axial direction A, and the other components can be efficiently arranged.

In this regard, in the present embodiment, the second terminal part 72 is arranged on the axial first side A1 with respect to the output gear 30, and is wired to the power module PM on the axial second side A2 of the power module PM. Thus, the second terminal part 72 can be efficiently arranged using a dead space that can be easily reserved on the axial first side A1 with respect to the output gear 30. As a result, the case 2 can be downsized.

As shown in FIG. 5, the second terminal part 72 may have a form in which each of the respective terminal-side bus bars 721 of the three phases is provided in a resin portion 722. The terminal-side bus bars 721 extend in the first direction X, and respective end portions of the terminal-side bus bars 721 on the first-direction first side X1 are joined to the respective bus bars 73 of the three phases, and respective end portions of the terminal-side bus bars 721 on the first-direction second side X2 are joined to a terminal part on the power module PM side. Note that in the resin portion 722, the terminal-side bus bar 721 may extend in the first direction X such that a direction perpendicular to a flat plate thereof faces the axial direction A. In this case, even in a case where a space in the axial direction A is relatively small, the second terminal part 72 can be arranged. Note that in a case where, in a portion of the second terminal part 72 on the first-direction second side X2 (a portion in the resin portion 722 to be described later), a direction perpendicular to a flat plate faces the axial direction A, there is required only a relatively small space in the axial direction A (a space corresponding to the thickness of the flat plate), but there is required a relatively large space in the second direction Y (a dimension in a width direction of the flat plate).

However, in the present embodiment, the portion of the second terminal part 72 on the first-direction second side X2 (the portion in the resin portion 722) can be efficiently arranged using a relatively large dead space in the second direction Y that can be easily reserved on the axial first side A1 with respect to the output gear 30. For example, the portion of the second terminal part 72 on the first-direction second side X2 (the portion in the resin portion 722 to be described later) may be arranged on the axial first side A1 with respect to the output gear 30 and in the vicinity of an axial position of the joint surface (mating surface) 222 between the differential cover member 202 and the case member 200 (for example, on the axial second side A2 or the axial first side A1 with respect to the mating surface 222). In this case, the portion of the second terminal part 72 on the first-direction second side X2 can be efficiently arranged. As a result, end portions, on the axial second side A2, of the three bus bars 73 extending in the axial direction A as described above can be efficiently connected to the power module PM using the second terminal part 72.

Further, in the present embodiment, as shown in FIG. 3, a dimension LX1 of the bus bar module 70 in the first direction X is larger than a dimension LX2 of the power module PM in the first direction X, and the dimension LX2 of the power module PM in the first direction X is larger than a dimension LX3 of the smoothing capacitor CM in the first direction X. Thus, a module arrangement suitable for the L-shape of the inverter housing chamber S4 described above can be achieved. Specifically, as shown in FIG. 3, the second terminal part 72 of the bus bar module 70, the power module PM, and the smoothing capacitor CM can be arranged in this order of longer dimensions in the first direction X, from the axial second side A2 toward the axial first side A1 in the axial direction A. With such an arrangement, the L-shaped region of the inverter housing chamber S4 can be efficiently used. In addition, since the L-shaped region of the inverter housing chamber S4 can be efficiently arranged, the dimension (depth) of the inverter housing chamber S4 in the second direction Y can be minimized. Further, by using a difference between the dimension LX1 in the first direction X and the dimension LX2 in the first direction X, it is easy to arrange the current sensor module 77 inside the first housing portion S41 while causing the current sensor module 77 to be adjacent to the power module PM in the direction X. Note that each of the dimension LX1 and the like of the modules is the overall dimension of the corresponding one of the modules, but may be a dimension of its body portion (for example, a body portion sealed with resin).

Further, in the present embodiment, as shown in FIG. 3, a dimension LA0 of the current sensor module 77 in the axial direction A is smaller than a dimension LA2 of the power module PM in the axial direction A, and the dimension LA2 of the power module PM in the axial direction A is smaller than a dimension LA3 of the smoothing capacitor CM in the axial direction A. Thus, an efficient module arrangement suitable for the L-shape of the inverter housing chamber S4 described above can be achieved. In addition, even in a case where the dimension LA3 of the smoothing capacitor CM in the axial direction A is relatively large, the smoothing capacitor CM and the power module PM can be arranged side by side in the axial direction A by relatively reducing the dimension LA2 of the power module PM. In this instance, by causing the dimension LX2 of the power module PM in the first direction X to be relatively large, it is also easy to relatively reduce the dimension LA3 of the power module PM.

Note that in the present embodiment, a dimension LA1 of the bus bar module 70 in the axial direction A is larger than the dimension LA2 of the power module PM in the axial direction A. However, a dimension (not shown), in the axial direction A, of a portion of the bus bar module 70 excluding the second terminal part 72 may be substantially the same as the dimension LA2 of the power module PM in the axial direction A.

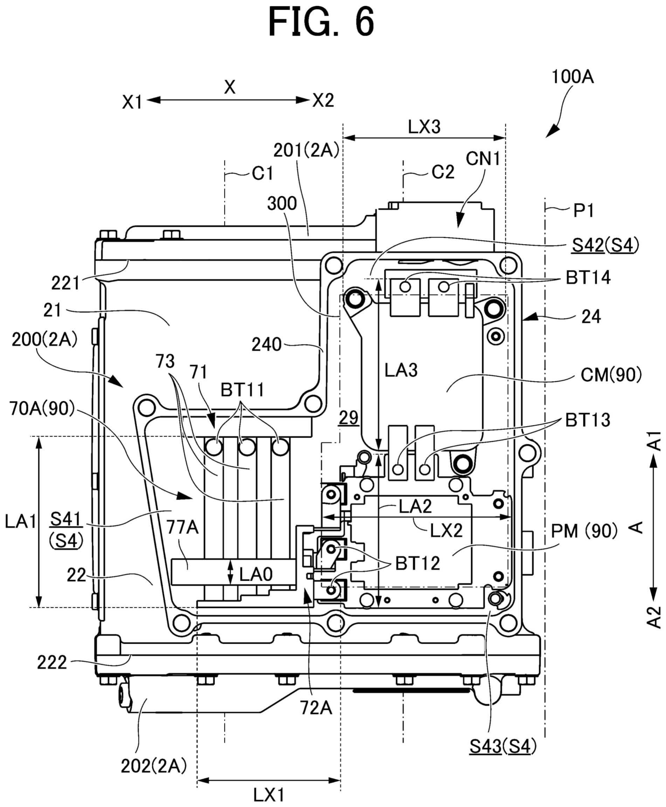

Next, some modifications to the embodiment described above will be described with reference to FIGS. 6 to 10. Hereinafter, components different from those in the embodiment described above will be mainly described, and other components may be similar to those in the embodiment described above. Therefore, in the following description, the components that may be similar to those in the embodiment described above are denoted by the same reference signs, and description thereof may be omitted.

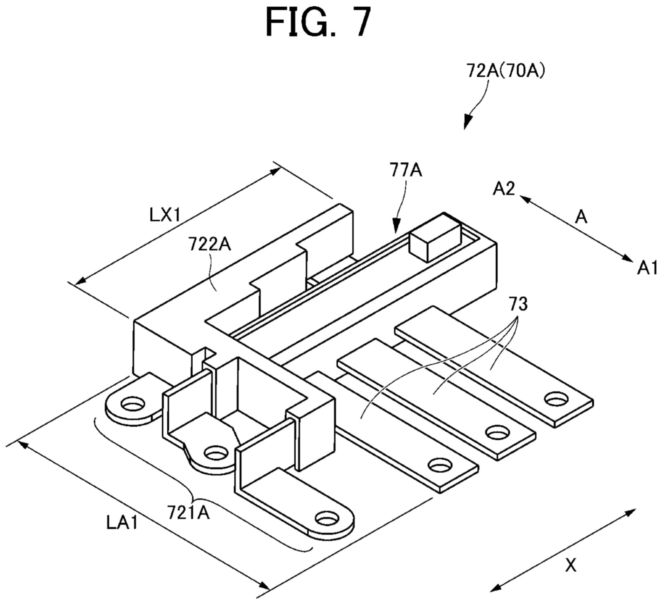

FIG. 6 is a top view of a vehicle drive device 100A according to a first modification, and FIG. 7 is a perspective view of a second terminal part 72A of a bus bar module 70A of the vehicle drive device 100A according to the first modification.

The vehicle drive device 100A according to the first modification is mainly different from the vehicle drive device 100 according to the embodiment described above in that the bus bar module 70 is replaced with the bus bar module 70A.

The bus bar module 70A according to the first modification is mainly different from the bus bar module 70A according to the embodiment described above in that the second terminal part 72 is replaced with the second terminal part 72A.

Specifically, the bus bar module 70A according to the first modification has a form in which each of respective terminal-side bus bars 721A of three phases is provided in the resin portion 722A, and the bus bar module 70A includes L-shaped portions arranged so as not to overlap each other as viewed in the upper-lower direction. Specifically, the terminal-side bus bars 721A of the second terminal part 72A extend in the first direction X, are connected or continuous to the respective end portions, on the axial second side A2, of the respective bus bars 73 of the three phases on the first-direction second side X2, and are wired to the power module PM on the first-direction first side X1. The terminal-side bus bars 721A of the second terminal part 72A and the respective bus bars 73 of the three phases form an L-shape as a whole in top view. In this case, the terminal-side bus bars 721A of the second terminal part 72A and the respective bus bars 73 of the three phases may extend in substantially the same plane perpendicular to the second direction Y. Thus, the bus bar module 70A can be efficiently arranged using a relatively small dead space in the second direction Y in the first housing portion S41. As a result, a case 2A can be downsized. Note that the bus bar module 70A (the similar applies to the bus bar module 70) may include a current sensor module 77A. That is, the current sensor module 77A that detects current of each phase may be arranged using the first housing portion S41.

Note that in the first modification, the bus bar module 70A is arranged substantially only in the first housing portion S41. Note that in the embodiment described above, regarding the bus bar module 70, the second terminal part 72, which is a part of the bus bar module 70, is arranged in the third housing portion S43. In this manner, the bus bar module 70 may be arranged by appropriately using not only the first housing portion S41 but also the third housing portion S43.

According to also the first modification, effects similar to those of the embodiment described above can be obtained.

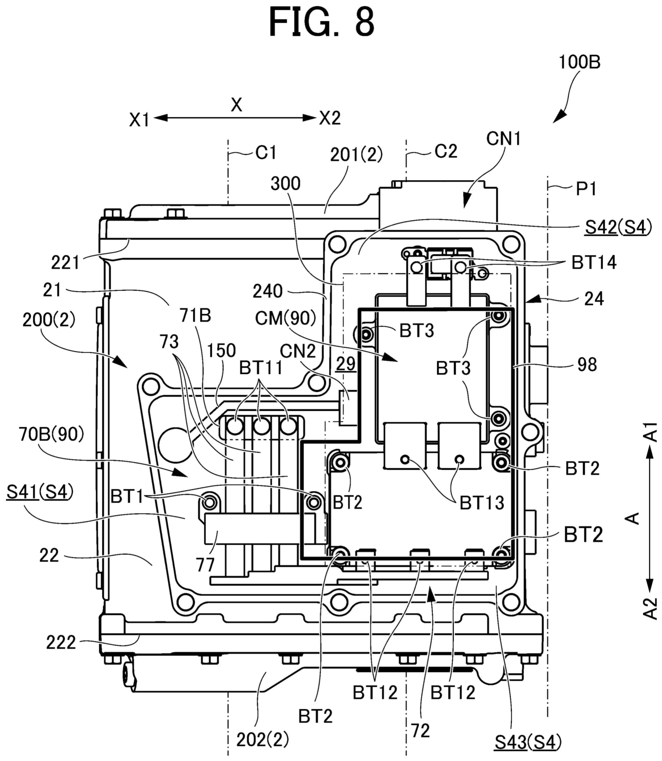

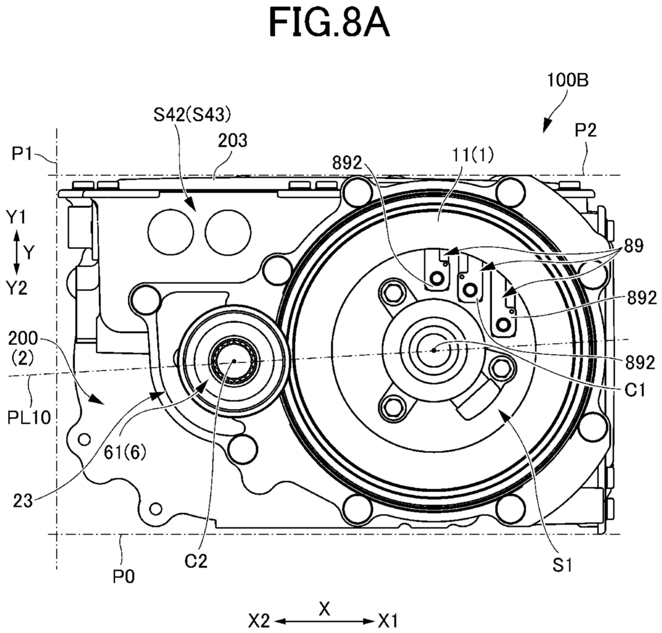

FIG. 8 is a top view of a vehicle drive device 100B according to a second modification. FIG. 8A is a side view schematically showing the vehicle drive device 100B according to the second modification as viewed in the axial direction from the axial first side A1. In FIG. 8, for the control board 98, only a frame thereof is shown, which forms a see-through view allowing components on the Y2 side with respect to the control board 98 to be seen. In addition, in FIG. 8A, illustration of the motor cover member 201 is omitted and illustration of the rotor of the rotary electric machine 1 is also omitted such that a state in the motor housing chamber S1 can be seen.

The vehicle drive device 100B according to the second modification is mainly different from the vehicle drive device 100 according to the embodiment described above in that the bus bar module 70 is replaced with a bus bar module 70B.

The bus bar module 70B according to the second modification is mainly different from the bus bar module 70 according to the embodiment described above in that the first terminal part 71 is replaced with a first terminal part 71B. The first terminal part 71B is different in mounting position from the first terminal part 71 according to the embodiment described above. Specifically, the first terminal part 71B is provided on the partition portion 29 instead of the side wall portion 240. The first terminal part 71B includes bus bars (not shown) of respective phases extending in the second direction Y in the motor housing chamber S1, and these bus bars are joined to power line bus bars 89 of the respective phases that are from the rotary electric machine 1 side, in the motor housing chamber S1, as shown in FIG. 8A. Note that as shown in FIG. 8A, each of the power line bus bars 89 may include a fastening portion 892 extending inward in the radial direction at the coil end portion 13, on the A2 side in the direction A, of the rotary electric machine 1.

In the second modification, the first terminal part 71B may be arranged offset toward the axial second side A2 with respect to the side wall portion 240 related to the first housing portion S41. In this case, a wire 150 of a low-voltage system can be easily routed by using the space between the first terminal part 71B and the side wall portion 240 in the axial direction A, in the inverter housing chamber S4. The wire 150 of the low-voltage system may electrically connect a sensor that detects a rotation angle of the rotary electric machine 1 or the like and the control board 98, for example. In this case, one end of the wire 150 may be introduced into the motor housing chamber S1 or the transmission mechanism housing chamber S2 via a connector (not shown) in a through hole (hole in the second direction Y) of the partition portion 29, and the other end of the wire 150 may be fixed to the control board 98 via a connector CN2.

According to also such a second modification, effects similar to those of the embodiment described above can be obtained.

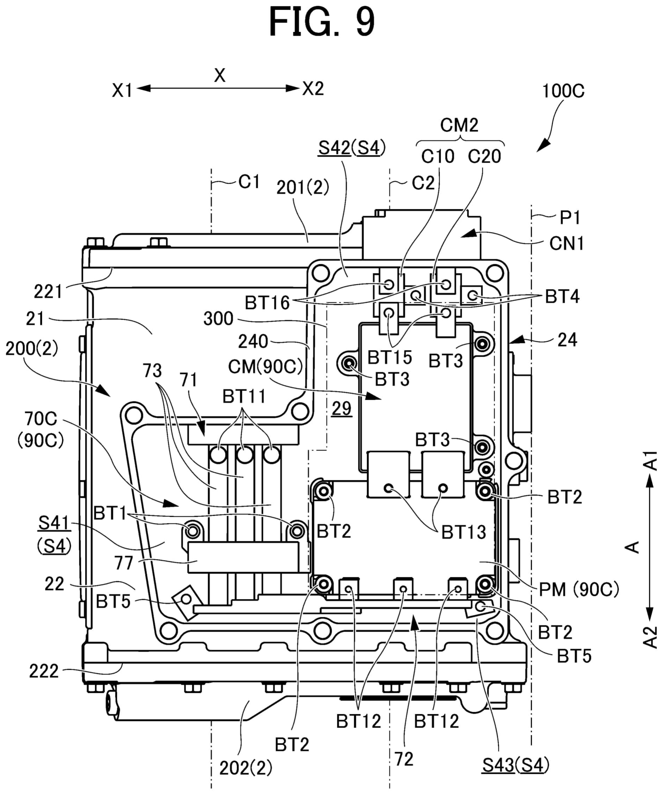

FIG. 9 is a top view of a vehicle drive device 100C according to a third modification, and FIG. 10 is a diagram showing an example of an electric circuit including the Y capacitor CM2.

The vehicle drive device 100C according to the third modification is mainly different in that the inverter device 90 is replaced with an inverter device 90C.

The inverter device 90C according to the third modification is different from the inverter device 90 according to the embodiment described above in that the Y capacitor CM2 is added. The Y capacitor CM2 may be in the form of a module integrated with the smoothing capacitor CM. As shown in FIG. 9, the Y capacitor CM2 includes two capacitors C10, C20. The capacitor C10 is electrically connected between the positive-side line and the ground. The capacitor C20 is electrically connected between the negative-side line and the ground.

The Y capacitor CM2 is arranged between the smoothing capacitor CM and the connector CN1 in the axial direction A. The Y capacitor CM2 is fixed to the partition portion 29 with fasteners BT4 such as bolts. In this case, the Y capacitor CM2 may be fixed to the partition portion 29 with the fasteners BT4, in the form of the module integrated with the smoothing capacitor CM as described above. However, in a modification, the Y capacitor CM2 may be fixed to the partition portion 29 with the fasteners BT4 separately from the smoothing capacitor CM, in the form of a module provided separately from the smoothing capacitor CM.

The inverter device 90C according to the third modification is further different from the inverter device 90 according to the embodiment described above mainly in that the bus bar module 70 is replaced with a bus bar module 70C.

The bus bar module 70C according to the third modification is mainly different from the bus bar module 70 according to the embodiment described above in that the bus bar module 70C is fixed to the partition portion 29 with fasteners BT5 such as bolts, separately from the current sensor module 77.

Also in the third modification, as shown in FIG. 9, the fasteners BT1 to BT5 for fixing the inverter device 90C to the partition portion 29 do not overlap each other as viewed in the second direction Y. Thus, the power module PM, the smoothing capacitor CM, the Y capacitor CM2, and the bus bar module 70C can be arranged in such a manner not to overlap each other as viewed in the second direction Y.

In addition, in the third modification, the power module PM, the smoothing capacitor CM, the Y capacitor CM2, and the bus bar module 70C are electrically connected between the rotary electric machine 1 and the connector CN1 via fasteners BT11 to BT13, BT15, BT16. Specifically, the fastener BT15 fastens electrical connection portions between the smoothing capacitor CM and the Y capacitor CM2, and the fastener BT16 fastens electrical connection portions between the Y capacitor CM2 and the connector CN1. Note that the fasteners BT11 to BT13, BT15, BT16 do not overlap each other as viewed in the second direction Y.

In the present embodiment, the fasteners BT11 to BT13, BT15, BT16 related to the electrically connected portions in the inverter device 90C overlap each other as viewed in a direction perpendicular to the second direction Y, like the description described above for the fasteners BT11 to BT14 with reference to FIG. 3B. That is, the fasteners BT11 to BT13, BT15, BT16 overlap each other in respective extending ranges thereof in the second direction Y. Note that an overlapping portion between the fasteners BT11 to BT13, BT15, BT16 is simply required to be at least a portion of each of the fasteners BT11 to BT13, BT15, BT16, and may be, for example, an effective thread portion thereof.

According to also such a third modification, effects similar to those of the embodiment described above can be obtained. Note that in the third modification, each dimensional relationship in the axial direction A in the embodiment described above is also applicable to the third modification. In this case, the dimension of the smoothing capacitor CM in the second direction Y may be replaced with a dimension, in the second direction Y, of a combination (total) of the smoothing capacitor CM and the Y capacitor CM2.

Although each embodiment has been described in detail above, the present disclosure is not limited to a specific embodiment, and various modifications and changes can be made within the scope of the claims. Further, all or some of components of the embodiment described above can be combined.

For example, in the embodiment described above (also similarly in the modifications, the same applies hereinafter), the smoothing capacitor CM is arranged in the second housing portion S42 and the power module PM is arranged in the third housing portion S43 in consideration of the point of a gradual increase in the dead space around the second axis C2 from the axial second side A2 toward the axial first side A1. However, the arrangement is not limited thereto. For example, the smoothing capacitor CM may be arranged in the third housing portion S43, and the power module PM may be arranged in the second housing portion S42. Such a configuration is suitable in a case where the dimension, in the second direction Y, of a stacked structure including the power module PM is significantly larger than the dimension of the smoothing capacitor CM in the second direction Y.

Further, in the embodiment described above, the vehicle drive device 100 (the similar applies to the vehicle drive device 100A and the like) has a two-axis configuration of the first axis C1 and the second axis C2. However, the configuration is not limited thereto, as described above. For example, as in a vehicle drive device 100D shown in FIG. 11, a counter gear mechanism 4 may be used instead of the reduction mechanism 34. In this case, the counter gear mechanism 4 is provided such that a first counter gear 42 that meshes with a gear 17 of the input member 16, which is from the rotary electric machine 1, and a second counter gear 43 that meshes with the output gear 30 of the differential gear mechanism 5 rotate together with a counter shaft 41. Note that the second counter gear 43 may be formed to have a diameter smaller than that of the first counter gear 42. In this case, there is obtained a three-axis configuration including a third axis C3 in addition to the first axis C1 and the second axis C2. The configuration and the like of the case 2 according to the embodiment described above are similarly applicable in the instance of this three-axis configuration.

Further, in the embodiment described above, the smoothing capacitor CM is arranged at substantially the same position as the position of the power module PM in the first direction X. However, the arrangement is not limited thereto. For example, a portion or entirety of the smoothing capacitor CM may be arranged on the first-direction second side X2 with respect to the power module PM. In this case, the smoothing capacitor CM may be arranged on a side surface of the case 2 on the first-direction second side X2.

Further, in the embodiment described above, the bus bar module 70 is arranged in the first housing portion S41, the smoothing capacitor CM is arranged in the second housing portion S42, and the power module PM is arranged in the third housing portion S43. However, the arrangement is not limited thereto. For example, the power module PM may be arranged in the first housing portion S41.

### REFERENCE SIGNS LIST

100, 100A, 100B, 100C, 100D: Vehicle drive device, 1: Rotary electric machine, 2: Case, 21: Motor case portion (portion that forms first housing chamber), 22: Transmission mechanism case portion (portion that forms first housing chamber), 23: Output shaft case portion (portion that forms first housing chamber), 24: Inverter case portion (portion that forms second housing chamber), 29: Partition portion, 34: Reduction mechanism (transmission mechanism), 5: Differential gear mechanism (transmission mechanism), 70, 70A: Bus bar module (wiring module), BA: Battery (power supply), A: Axial direction (left-right direction), Y: Second direction (upper-lower direction), PM: Power module, CM: Smoothing capacitor (capacitor module), S1: Motor housing chamber (first housing chamber), S4: Inverter housing chamber (second housing chamber), 99: Heat dissipation plate (heat dissipation member), 73: Bus bar, 77, 77A: Current sensor module (sensor module), BT 11: Fastener (first fastening member), BT12: Fastener (second fastening member), and BT13: Fastener (third fastening member)

## Claims

1. A vehicle drive device comprising:
a rotary electric machine;
a transmission mechanism drivingly coupled between the rotary electric machine and a wheel;
a power module including a power semiconductor element, the power module being configured to supply alternating-current power of a plurality of phases to the rotary electric machine;
a capacitor module including a smoothing capacitor electrically connected between the power module and a power supply;
a wiring module including bus bars of a plurality of phases that electrically connect the rotary electric machine and the power module; and
a case that houses the rotary electric machine, the transmission mechanism, the power module, the capacitor module, and the wiring module,
wherein
the case integrally includes a portion that forms a first housing chamber, a portion that forms a second housing chamber, and a partition portion that separates the first housing chamber and the second housing chamber from each other,
the first housing chamber houses the rotary electric machine and the transmission mechanism,
the second housing chamber houses the power module, the capacitor module, and the wiring module, and
the power module, the capacitor module, and the wiring module are directly fastened to the partition portion at respective fastening positions not overlapping each other as viewed in an upper-lower direction.

2. The vehicle drive device according to claim 1, wherein
the power module includes a heat dissipation member thermally connected to the power semiconductor element, and
a cooling water passage is formed between the heat dissipation member and the partition portion.

3. The vehicle drive device according to claim 1, wherein
the vehicle drive device is mountable in a vehicle in an orientation in which an axial direction of the rotary electric machine corresponds to a left-right direction of a vehicle, and
with respect to a length in a vehicle front-rear direction in a vehicle mounted state, the wiring module is longer than the power module, and the power module is longer than the capacitor module.

4. The vehicle drive device according to claim 1, further comprising a sensor module including a current sensor configured to detect a current flowing through each of the bus bars of the plurality of phases,
wherein
the sensor module is housed in the second housing chamber in the case,
the vehicle drive device is mountable in a vehicle in an orientation in which an axial direction of the rotary electric machine corresponds to a left-right direction of a vehicle, and
with respect to a length in a vehicle left-right direction in a vehicle mounted state, the sensor module is shorter than the power module, and the power module is shorter than the capacitor module.

5. The vehicle drive device according to claim 1, wherein a first fastening member forming an electrical connection portion between the wiring module and a terminal block from the rotary electric machine, a second fastening member forming an electrical connection portion between the power module and the wiring module, and a third fastening member forming an electrical connection portion between the power module and the capacitor module overlap each other as viewed in a direction perpendicular to the upper-lower direction or a fastening direction.

6. The vehicle drive device according to claim 1, wherein the power module, the capacitor module, and the wiring module overlap the rotary electric machine as viewed in a direction perpendicular to the upper-lower direction.

7. The vehicle drive device according to any one of claims 1 to 6, wherein the power module, the capacitor module, and the wiring module include respective portions different from respective electrical connection portions of the power module, the capacitor module, and the wiring module, and the respective portions different from the respective electrical connection portions are arranged in respective different regions in the case as viewed in the upper-lower direction.
